(19) Europäisches Patentamt
European Patent Office
Office européen des brevets

(11) **EP 1 129 525 B1**

(12) **EUROPÄISCHE PATENTSCHRIFT**

(45) Veröffentlichungstag und Bekanntmachung des Hinweises auf die Patenterteilung:
**26.02.2003 Patentblatt 2003/09**

(51) Int Cl.$^7$: **H04B 1/707**

(21) Anmeldenummer: **99963227.6**

(22) Anmeldetag: **12.11.1999**

(86) Internationale Anmeldenummer:
**PCT/DE99/03614**

(87) Internationale Veröffentlichungsnummer:
**WO 00/030270 (25.05.2000 Gazette 2000/21)**

(54) **VERFAHREN ZUR DATENÜBERTRAGUNG IN EINEM FUNK-KOMMUNIKATIONSSYSTEM MIT CDMA-TEILNEHMERSEPARIERUNG UND VARIABLEN SPREIZFAKTOREN**

METHOD FOR TRANSMITTING DATA IN A RADIOCOMMUNICATION SYSTEM WITH CDMA SUBSCRIBER SEPARATION AND VARIABLE SPREAD FACTORS

PROCEDE DE TRANSFERT DE DONNEES DANS UN SYSTEME DE RADIOCOMMUNICATIONS A DISTINCTION ENTRE DIFFERENTS ABONNES PAR AMDC ET A FACTEURS D'ETALEMENT VARIABLES

(84) Benannte Vertragsstaaten:
**DE ES FR GB**

(30) Priorität: **13.11.1998 DE 19852571**

(43) Veröffentlichungstag der Anmeldung:
**05.09.2001 Patentblatt 2001/36**

(73) Patentinhaber: **SIEMENS AKTIENGESELLSCHAFT**
**80333 München (DE)**

(72) Erfinder:
• **BAHRENBURG, Stefan**
  **D-81477 München (DE)**
• **BAIER, Paul, Walter**
  **D-67661 Kaiserslautern (DE)**
• **EMMER, Dieter**
  **D-82319 Starnberg (DE)**
• **MAYER, Jürgen**
  **D-67105 Schifferstadt (DE)**
• **SCHLEE, Johannes**
  **D-89134 Blaustein (DE)**
• **WEBER, Tobias**
  **D-67731 Otterbach (DE)**

(56) Entgegenhaltungen:
**EP-A- 0 828 361          EP-A- 0 876 008**

**Beschreibung**

Die Erfindung betrifft ein Verfahren zur Datenübertragung und ein Funk-Kommunikationssystem mit CDMA-Teilnehmerseparierung und variablen Spreizfaktoren.

In Funk-Kommunikationssystemen werden Daten (beispielsweise Sprache, Bildinformation oder andere Daten) mit Hilfe von elektromagnetischen Wellen über eine Funkschnittstelle übertragen. Die Funkschnittstelle bezieht sich auf eine Verbindung zwischen einer Basisstation und Teilnehmerstationen, wobei die Teilnehmerstationen Mobilstationen oder ortsfeste Funkstationen sein können. Das Abstrahlen der elektromagnetischen Wellen erfolgt dabei mit Trägerfrequenzen, die in dem für das jeweilige System vorgesehenen Frequenzband liegen. Für zukünftige Funk-Kommunikationssysteme, beispielsweise das UMTS (Universal Mobile Telecommunication System) oder andere Systeme der 3. Generation, sind Frequenzen im Frequenzband von ca. 2000 MHz vorgesehen.

Aus SMG L1 Expert Group, Tdoc 120/98, Bocholt, vom 18-20. Mai 1998, S.16-19, ist es bekannt, daß für zukünftige Funk-Kommunikationssysteme eine Funkschnittstelle vorgesehen ist, die in einem Frequenzband eine gleichzeitige Übertragung mehrerer Signale vorsieht, deren Datensymbole durch Spreizkodes gespreizt sind. Dieses Verfahren wird als CDMA (code division multiple access) bezeichnet, denn'es gestattet dem Empfänger, anhand der Spreizkodes die Signale wieder zu trennen und die Datensymbole der unterschiedlichen Datenströme zu detektieren.

Das CDMA-Übertragungsverfahren ermöglicht eine störresistente Übertragung mit leichter Anpassung der Datenrate einer Verbindung durch Zuordnung einer oder mehrerer Spreizkodes bzw. durch Veränderung des Spreizfaktors.

Durch die Verwendung von unterschiedlichen Spreizfaktoren ergibt sich jedoch auf der Empfangsseite das Problem, unterschiedliche Symbol- und Datenraten aufzulösen und flexibel auf Veränderungen des Spreizfaktors zur reagieren. Dazu sind z.Z. noch keine adäquanten Lösungsmöglichkeiten bekannt. Das Verfahren mit dem Merkmalen des Anspruchs 1 und die Empfangseinrichtung mit den Merkmalen des Anspruchs 8 sind Lösungsmöglichkeiten für dieses Problem. Vorteilhafte Weiterbildungen der Erfindung sind in den Unteransprüchen angegeben.

Erfindungsgemäß wird bei mehreren Signalen mit unterschiedlichen Spreizfaktoren Bezug auf einen vorgebbaren maximalen Spreizfaktor genommen. Empfangsseitig werden für ein Signal mit einem Spreizfaktor, der kleiner als der maximale Spreizfaktor ist, mehrere virtuelle Spreizkodes gebildet, von denen jeder einzelne nur bestimmte Symbole oder Symbolgruppen aus mehreren zusammenhängenden Symbolen aus dem Empfangsdatenstrom detektiert. Wird der maximale Spreizfaktor durch den kleineren, dem virtuellen Spreizkode entsprechenden Spreizfaktor geteilt, ergibt sich die Anzahl der virtuellen Spreizkodes, die zur Detektion des Signals mit kleinem Spreizfaktor benutzt werden sollten. Diese virtuellen Spreizkodes sind die Basis der weiteren Auswertung dieses Signals, denn die Detektion dieses Signals wird mit den virtuellen Spreizkodes durchgeführt. Die Detektionsergebnisse der Detektion mit den virtuellen Spreizkodes werden anschließend zum empfangsseitigen Datenstrom des entsprechenden Signals aneinandergereiht.

Nicht alle Symbole eines Datenstroms werden also in einem Detektionskanal ausgewertet, sondern es findet eine symbol- oder symbolgruppenweise Aufteilung des Datenstroms auf mehrere virtuelle Kanäle möglichst gleicher Datenrate statt. Damit kann für Kanäle mit unterschiedlichen Spreizfaktoren und damit unterschiedlichen Datenraten trotzdem eine einheitliche Detektion mit gleicher Datenrate in den Kanälen nachgebildet werden.

Damit kann auch unabhängig von den tatsächlich verwendeten Spreizfaktoren mit einer einheitlichen Symbolrate das Empfangssignal für alle enthaltenen Signale ausgewertet werden. Die Empfangseinrichtung wird auf die maximale Signalzahl und den maximalen Spreizfaktor dimensioniert, kann aber mit geringsten Anpassungen problemlos eine geringere Anzahl von Signalen verarbeiten, die jedoch zumindest teilweise einen geringeren Spreizfaktor verwenden.

Diese Lösung ist prinzipiell für jede Art von CDMA-Detektoren geeignet, d.h. für Rake-Empfänger ebenso wie für Detektoren mit gemeinsamer Detektion. Eine solche Lösung ist besonders leicht zu implementieren.

Nach vorteilhaften Weiterbildungen der Erfindung kann eine Modifizierung der virtuellen Spreizkodes auch Kodehopping oder Kodescrambling (entsprechend einer W-CDMA Übertragung nach SMG L1 Expert Group, Tdoc 120/98, Bocholt, vom 18-20. Mai 1998) unterstützen. Hier sind die virtuellen Spreizcodes so gewählt, daß für jedes Symbol oder eine Symbolgruppe ein anderer Spreizkode mit kleinem Spreizfaktor angenommen werden kann.

Durch Scrambling werden besonders bei kurzen Spreizkodes (kleiner Spreizfaktor) Diversitätseffekte ausgenutzt. Beim Scrambling werden die Chips der Spreizkodes verändert. Dies kann mit modulo 2 Operationen, durch allgemeine Multiplikation mit einer Folge sowie komplex- oder reellwertig geschehen. Nach Ablauf einer Scramblingperiode werden die Chips der Spreizkodes in gleicher Weise verändert. Ist die Scramblingperiode gleich der Spreizkodelänge, dann ändern sich die Spreizkodes effektiv nicht. Ist die Periode länger als die Symbollänge, ändert der Spreizkode von Symbol zu Symbol, so daß sich der Zyklus über mehrere Symbole, über einen Zeitschlitz (W-CDMA Vorschlag) oder über einen Rahmen und darüber hinaus erstrecken kann. Ist die Scamblingperiode genau so lang wie der maximale Spreizfaktor, so ergibt sich ein besonderer Vorteil. So kann der Detektor nicht nur unter der Berücksichtigung von gleichen Spreizkodes für den maximalen Spreizfaktor aufwandsgünstig detektieren, sondern auch mit demselben Aufwand das Scrambling der Spreizkodes mit kleinem Spreizfaktor berücksichtigen.

Werden wie zum Beispiel, wie bei W-CDMA, nur Spreizfaktoren bzw. Kodelängen oder Symbollängen zugelassen, die durch Division mit ganzen Zahlen aus dem maximalen Spreizfaktor hervorgehen, können immer in der oben beschriebenen Art und Weise virtuelle Spreizkodes mit und ohne Berücksichtigung von Scrambling verwendet werden.

Um unabhängig von der momentanen Zuweisung von Spreizkodes zu Verbindungen eine Detektionseinrichtung entwickeln zu können, wird vorgeschlagen, daß eine Detektionseinrichtung für eine Anzahl von Kanälen dimensioniert wird, die der Anzahl von Kanälen mit dem maximalen Spreizfaktor entspricht, wobei zur Verarbeitung von Signalen mit unterschiedlichen Spreizfaktoren eine Detektion auf der Basis von virtuellen Spreizkodes erfolgt. Dies ist besonders wichtig, wenn die Detektionseinrichtung eine gemeinsame Detektion (joint detection nach DE 41 21 356 A1) mit einer Eliminierung zumindest eines Störsignals durchführt.

Eine weitere Verbesserung des erfindungsgemäßen Verfahrens, die auch ohne die virtuellen Spreizkodes einsatzbar ist, ergibt sich, wenn beachtet wird, daß sich die Datensymbole zu einem Empfangssignal zumindest teilweise überlagern. Dies gilt sowohl für die Intersymbolinterferenzen (ISI) als auch für die Interferenzen zwischen den Teilnehmersignalen (MAI). Es wird das Empfangssignal abgetastet und eine Empfangsmatrix aufgestellt. Weiterhin wird eine Systemmatrix mit signalindividuellen auf Kanalimpulsantworten bezogenen Werten nach einer Bandstruktur belegt.

Benachbarte Positionen in der Systemmatrix werden derart belegt, daß sich die signalindividuellen Werte der verschiedenen Signale abwechseln und die belegten Positionen entsprechend der Überlagerungen zwischen den Symbolen ausgerichtet sind. Zwischen zwei Werten eines Teilnehmersignals mit einem großen Spreizfaktor werden gemäß des Spreizfaktorverhältnisses Werte eines Teilnehmersignals mit kleinem oder gleichem Spreizfaktor angeordnet. Für die Teilnehmersignale mit dem kleineren Spreizfaktor sind entsprechend mehr beieinanderliegende Positionen vorgesehen. Es wird daraufhin eine lineare Detektion für die Datensymbole der zumindest zwei Datenströme durch eine Verknüpfung der Systemmatrix und der Empfangmatrix durchgeführt.

Damit wird gegenüber der in der Literatur, siehe A.Klein, "Multi-user detection of CDMA signals - algorithms and their application to cellular mobile radio", VDI Verlag, 1996, S.38-43, eine verbesserte Bandstruktur erreicht und den Anforderungen variabler Spreizkodes entsprochen. Die Verwendung unterschiedlicher Spreizfaktoren führt zu einer größeren Anzahl von Interferenzen zwischen Symbolen unterschiedlicher Teilnehmersignale. Die erfindungsgemäße Aufstellung der Systemmatrix trägt dazu bei, trotz dieser Interferenzen aufwandsgünstig zu detektieren. Wird eine solche optimierte Detektion durchgeführt, so ergeben sich kürzere Rechenzeiten, die es erlauben, den Detektor in einem "Idle-Mode" zu schalten. Dadurch wird der Stromverbrauch und/oder die Wärmeabgabe des Gerätes gesenkt.

Ausführungsbeispiele der Erfindung werden anhand der beiliegenden Zeichnungen näher erläutert.

Dabei zeigen

Fig 1      eine schematische Darstellung eines Funk-Kommunikationssystems,

Fig 2      eine Sendeeinrichtung,

Fig 3      eine Empfangseinrichtung, und

Fig 4, 5      eine Zerlegung von Spreizkodes in virtuelle Spreizkodes.

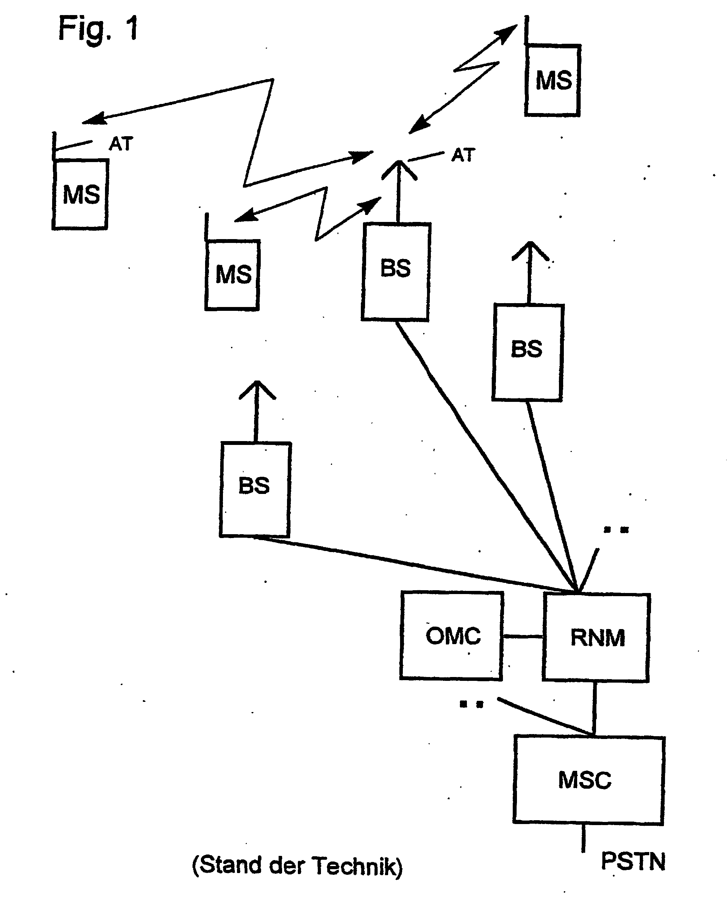

Das in Fig 1 dargestellte Mobilfunksystem als Beispiel eines Funk-Kommunikationssystems besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNM zum Zuteilen von funktechnischen Ressourcen verbunden. Jede dieser Einrichtungen RNM ermöglicht wiederum eine Verbindung zu zumindest einer Basisstation BS.

Eine solche Basisstation BS kann über eine Funkschnittstelle eine Verbindung zu Teilnehmerstationen, z.B. Mobilstationen MS oder anderweitigen mobilen und stationären Endgeräten aufbauen. Durch jede Basisstation BS wird zumindest eine Funkzelle gebildet. In Fig 1 sind Verbindungen zur Übertragung von Nutzinformationen zwischen einer Basisstation BS und Mobilstationen MS dargestellt.

Ein Operations- und Wartungszentrum OMC realisiert Kontroll- und Wartungsfunktionen für das Mobilfunksystem bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß.

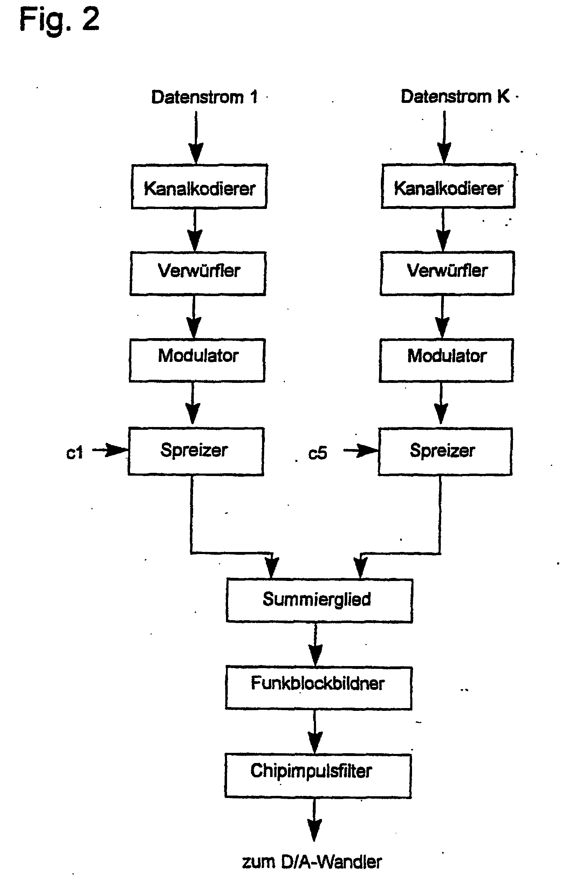

Bei einem CDMA-Übertragungsverfahren kommt eine Senderstruktur nach Fig 2 zu Einsatz. Über die Funkschnittstelle sollen K Datenströme übertragen werden. Es wird eine Kanalkodierung, eine Verwürfelung (interleaving), eine Modulation und eine Spreizung (spreading) der Daten durchgeführt. Die Spreizung wird mit individuellen Spreizkodes $c1..c5$ ausgeführt, die eine Unterscheidung von Teilnehmersignalen innerhalb des Signalgemischs zuläßt. Anschließend werden die einzelnen Teilnehmersignale aufsummiert und mit dem Summensignal ein Funkblock gebildet. Die Funkblockbildung bezieht sich vor allem auf ein Übertragungssystem mit "burstartigem" Senden. Zum kontinuierlichen Senden, wie im W-CDMA-Betrieb, werden innerhalb der Funkblockbildung die Daten eines Zeitschlitzes (slot) zusammengestellt. Daraufhin wird das Signal in einem Chipimpulsfilter gefiltert und in einem D/A-Wandler in ein analoges Signal umgewandelt, das verstärkt und über Antennen AT abgestrahlt werden kann.

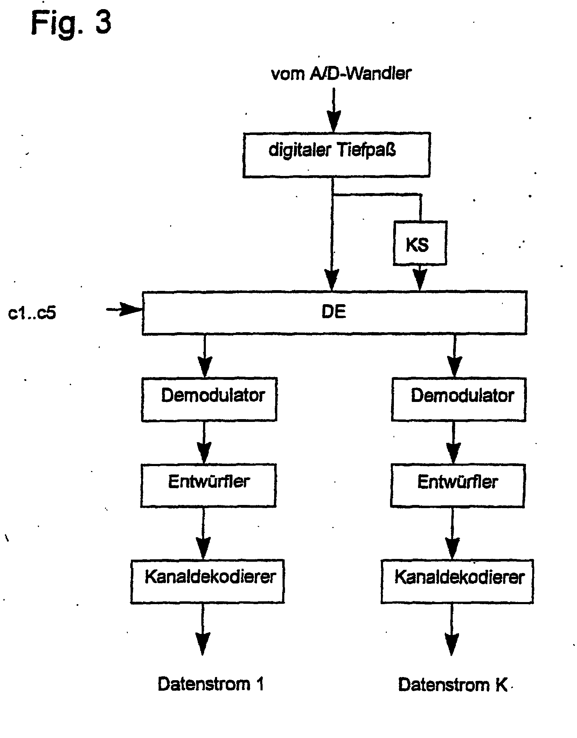

Die korrespondierende Struktur einer Empfangseinrichtung ist aus Fig 3 ersichtlich. Nachdem die Signale bei der empfangenden Funkstation über die dortige Antenne AT empfangen, anschließend verstärkt und ins Basisband umgewandelt wurden, findet eine Abtastung des Empfangssignals und eine A/D-Wandlung statt, so daß das Empfangssignal einem digitalen Tiefpaß zugeführt werden kann. Das digitalisierte Signal wird nun parallel einem Kanalschätzer KS und einer Detektionseinrichtung DE zugeführt. Dabei wird für die folgende Betrachtung angenommen, daß das Empfangssignal in Form einer Empfangsmatrix e vorliegt, wobei

$$e = A \cdot d + n \text{ gilt.}$$

A beschreibt eine Systemmatrix, d gibt die zu detektierenden Daten in Matrixform an und n ist eine den Rauschanteil enthaltende Matrix.

Im Kanalschätzer KS werden Trainingssequenzen, die im Empfangssignal verzerrt vorhanden sind, mit im Empfänger vorliegenden unverzerrten Trainingssequenzen verglichen und aus dem Vergleich Kanalimpulsantworten bestimmt, die teilnehmerindividuell den Übertragungskanal beschreiben. Mit Hilfe aer Kanalimpulsantworten wird die Systemmatrix A aufgestellt. Die Systemmatrix A enthält auf die individuellen Kanalimpulsantworten bezogene Werte, die auch als kombinierte Kanalimpulsantwort bezeichnet werden. Die kombinierte Kanalimpulsantwort entsteht durch eine Faltung des Spreizkodes c mit der zugehörigen Kanalimpulsantwort individuell für jedes Teilnehmersignal.

Beim einen Rake-Empfänger wird mathematisch gesehen auch mit einer Systemmatrix A gearbeitet. Hier sind in den Kanalimpulsantworten nur bestimmte, den Fingern des Rake-Empfängers entsprechende, Pfade berücksichtigt. Dies läßt sich auch auf auf dem Rake-Empfänger basierende Mehrnutzerdetektion verallgemeinern.

Die benötigten Informationen über den Mobilfunkkanal können nicht nur aus Pilotsymbolen, Mitt- oder Präambeln usw. gewonnen werden, sondern auch, wie in der Aufwärtsstecke von IS-95, aus den übertragenen Symbolen selbst.

Wird von zwei Signalen mit Spreizfaktoren SF=3 und SF=6 ausgegangen, wobei für beide die Kanalimpulsantwort eine Länge von vier Elementen hat, so ergibt sich für das erste Signal (SF=6) ein Vektor $b^1$ der Länge 9 = 6 + 4 -1, und zweite Signal (SF=3) ein Vektor $b^2$ der Länge 6 = 3 + 4 + -1.

Der Vektor b beschreibt jeweils das Ergebnis der individuellen Faltung von Spreizkode c mit der Kanalimpulsantwort. Dieser Vektor gibt die Antwort des Übertragungskanals auf eine gesendete "1" wieder. Mit diesen Vektoren $b^1$ und $b^2$ wird nun die Systemmatrix A folgendermaßen belegt.

$$A = \begin{pmatrix}
b^1_1 & b^2_1 & 0 & 0 & 0 & 0 & .. & 0 \\
b^1_2 & b^2_2 & 0 & 0 & 0 & 0 & .. & 0 \\
b^1_3 & b^2_3 & 0 & 0 & 0 & 0 & .. & 0 \\
b^1_4 & b^2_4 & b^2_1 & 0 & 0 & 0 & .. & 0 \\
b^1_5 & b^2_5 & b^2_2 & 0 & 0 & 0 & .. & 0 \\
b^1_6 & b^2_6 & b^2_3 & 0 & 0 & 0 & .. & 0 \\
b^1_7 & 0 & b^2_4 & b^1_1 & b^2_1 & 0 & .. & 0 \\
b^1_8 & 0 & b^2_5 & b^1_2 & b^2_2 & 0 & .. & 0 \\
b^1_9 & 0 & b^2_6 & b^1_3 & b^2_3 & 0 & .. & 0 \\
0 & 0 & 0 & b^1_4 & b^2_4 & b^2_1 & .. & 0 \\
.. & .. & .. & .. & .. & .. & .. & .. \\
0 & 0 & 0 & 0 & 0 & 0 & .. & 
\end{pmatrix}$$

Durch die abwechselnde Anordnung von Vektoren $b^1$ und $b^2$, wobei der Vektor $b^2$ aufgrund des kleiner Spreizfaktor häufiger benutzt wird, wird eine Bandstruktur der Systemmatrix A erreicht, auch wenn unterschiedlich Spreizfaktoren SF verwendet werden.

Die kombinierten Kanalimpulsantworten der Symbole, zwischen denen Interferenzen möglich sind - dies sind sowohl aufeinanderfolgende Symbole eines Signals als auch Symbole unterschiedlicher aber gleichzeitig übertragener Teilnehmersignale -, befinden sich in benachbarten Positionen der Systemmatrix A. Es sei angemerkt, daß für obenstehendes Beispiel die erste und zweite, die vierte und fünfte usw. Spalte auch vertauscht werden können. Im allgemeinen ist beim Aufstellen der Systemmatrix A sicherzustellen, daß die kombinierten Kanalimpulsantworten der interferierende Symbole dicht beieinander stehen und die Anzahl der zu reservierenden Positionen in der Systemmatrix A für die Signale im umgekehrten Verhältnis ihrer Spreizfaktoren steht.

In der Detektionseinrichtung DE wird entsprechend dem Ausführungsbeispiel eine gemeinsame Detektion durchgeführt, wobei jedoch auch jeder andere lineare Empfänger, z.B. mit Entscheidungsrückführung (decision feedback) oder andere Mehrteilnehmerdetektoren, verwendet werden können. Durch die Bandstruktur der Systemmatrix A wird bei diesen Detektoren hierbei eine Matrixinversion, z.B. durchgeführt z.B. durch eine Cholesky-Zerlegung, erheblich erleichtert.

Dabei ist die Gleichung

$$\hat{d} = (A^{*T} A)^{-1} A^{*T} e$$

aufzulösen, wobei $\hat{d}$ die geschätzten Datensymbole sind. Die detektierten Daten werden daraufhin demoduliert, entwürfelt (deinterleaving) und kanaldekodiert, so daß wiederum getrennte Datenströme 1 bis K vorliegen.

Weitere Einzelheiten sind J.Mayer, J.Schlee, T.Weber, "Realtime feasibility of Joint Detection CDMA", Proceedings of the 2nd European Personal Mobile Communications Conference, Bonn, S.245-252, Sept. 1997, zu entnehmen.

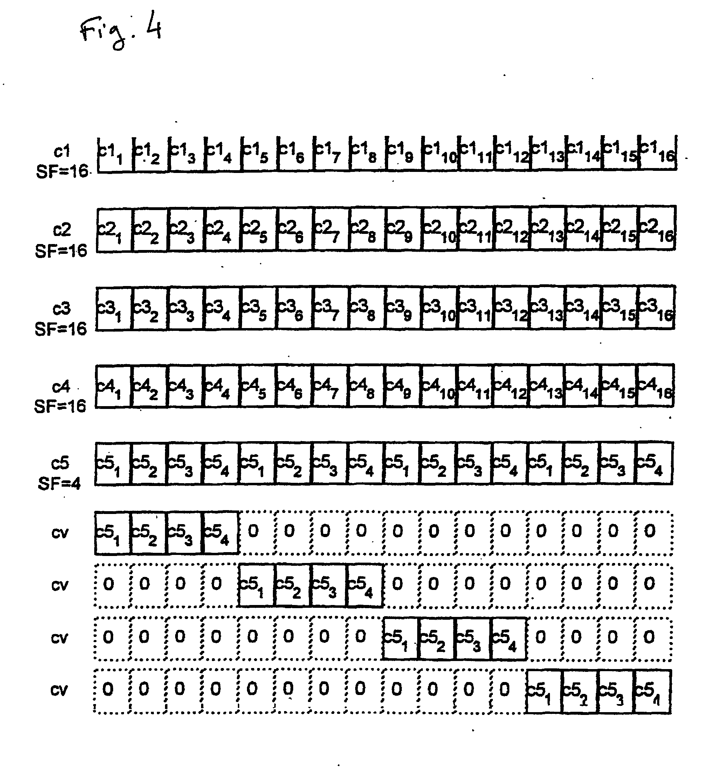

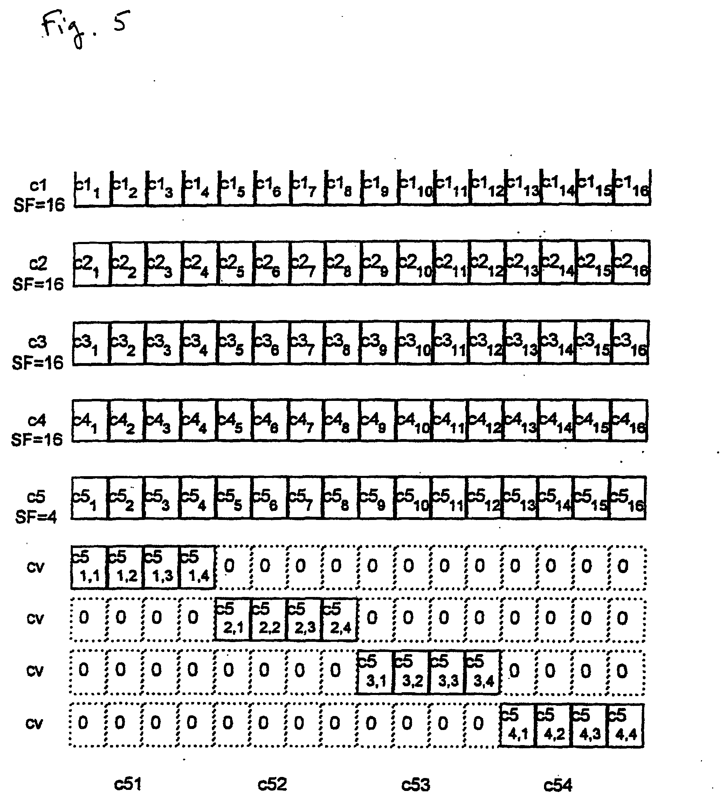

Auf die Datendetektion wird nun im Zusammenhang von Fig 4 und 5 eingegangen. Es wird dabei davon ausgangen, daß der maximale Spreizfaktor SFmax=16 ist und die Detektionseinrichtung auf maximal acht parallel zu verarbeitende Teilnehmersignale ausgelegt ist. So ergibt sich eine Maximallast von:

$$Lmax = 8 * 1/SFmax.$$

Die aktuelle Last wird angegeben mit

$$L = \sum_{k=1}^{K} \frac{1}{SF_k} .$$

Für das folgende Beispiel werden über die Funkschnittstelle gleichzeitig fünf Verbindungen mit den Spreizkodes c1 bis c5 versorgt. Vier Verbindungen benutzten die Grunddatenrate und haben einen Spreizfaktor von SF=16, währenddessen die fünfte Verbindung mit vierfacher Datenrate und einem Spreizfaktor von SF=4 betrieben wird. Damit ist die Maximallast erreicht.

Jeder Spreizkode c1 bis c4 besteht aus 16 Chips, wobei nach Fig 4 für die vier Verbindungen mit den Spreizkodes cl..c4 die 16 Chips frei gewählt sind, so daß sich möglichst zueinander orthogonale Spreizkodes ergeben. Der fünfte Spreizkode c5, dessen Grundsymbol nur aus vier Chips besteht, wird also innerhalb der 16 Chips viermal wiederholt. Damit wird allerdings auch die vierfache Datenmenge übertragen, in dem in Fig 4 dargestellten Zeitintervall also vier Symbole.

Entsprechend dem Ausführungsbeispiel wird jeder der vier im dargestellten Zeitintervall aufeinanderfolgenden Spreizkodes c5 einem virtuelle Spreizkodes cv zugeordnet und für die übrigen Stellen der Wert "0" eingefügt. Eine Überlagerung der virtuellen Spreizkodes cv ergibt wieder die Abfolge der ursprünglichen Spreizkodes c5. Nach den vier dargestellten Symbolen der Fig 4 wiederholt sich die Aufteilung in virtuelle Spreizkodes cv, so daß z.B. der den ersten virtuellen Kanal bildende virtuelle Spreizkode c51 somit das 1., 5., 9. usw. Symbol detektiert.

Es sei angemerkt, daß auch eine Symbolgruppe aus mehreren, z.B. zwei Symbolen - entspricht 8 Chips, einem virtuellen Spreizkode zugeordnet werden kann. Dies ist besonders dann vorteilhaft, wenn keine Verbindung mit dem maximalen Spreizfaktor SFmax betrieben wird.

Insgesamt verarbeitet die Detektionseinrichtung DE nun acht Kanäle mit der Grunddatenrate, obwohl unterschiedliche Spreizfaktoren SF verwendet werden. Änderungen der Spreizfaktoren SF können sehr leicht im Empfänger nachvollzogen werden. Eine Realisierung der Empfangseinrichtung durch einen anwendungsspezifischen Schaltkreis (ASIC) wird dadurch ermöglicht.

Je nachdem, wie die Konstellation der Spreizkodes c auch sein mag, die Detektionseinrichtung DE kann fest für die beispielsweise acht, mitunter virtuellen, Kanäle dimensioniert werden. Die acht, mitunter virtuellen, zu den Kanälen gehörenden Spreizkodes c werden frei einstellbar gehalten. Die Detektionsergebnisse der Detektion mit den zum Spreizcode c5 gehörenden virtuellen Spreizkodes werden anschließend zum empfangseitigen Datenstrom des betreffenden Teilnehmersignals aneinandergereiht.

Eine zusätzliche Verbesserung ergibt sich nach Fig 5. Dabei werden für den fünften Spreizkode c5 nicht viermal die gleiche Chipfolge gewählt, sondern vier unterschiedliche Spreizkodes c51, c52, c53, c54 . Diese können zyklisch verändert, z.B. ringförmig getauscht oder entsprechend einer Sprungsequenz verändert werden, so daß sich ein zusätzlicher Kode-Diversitätsgewinn durch Scrambling ergibt. Die Sprungsequenz wird zum Verbindungsaufbau vereinbart und kann während der Verbindung modifiziert werden.

## Patentansprüche

1. Verfahren zur Datenübertragung in einem Funk-Kommunikationssystem mit CDMA-Teilnehmerseparierung und variablen Spreizfaktoren, bei dem

   - in einem Kanal gleichzeitig Signale von zumindest zwei Datenströmen mit durch Spreizkodes (c) gespreizten Datensymbolen übertragen werden, wobei für die Signale unterschiedliche Spreizfaktoren (SF) einstellbar sind, die kleiner oder gleich einem maximalen Spreizfaktor (SFmax) sind,
   - empfangsseitig die Signale mit Hilfe der Spreizkodes (c) detektiert werden,

   **dadurch gekennzeichnet,**

   - **daß** empfangsseitig für ein Signal mit einem Spreizfaktor (SF), der kleiner als der maximale Spreizfaktor (SFmax) ist, mehrere virtuelle Spreizkodes (cv) gebildet werden, die jeweils nur auf einzelne Symbole oder Symbolgruppen des Signals bezogen sind,
   - die Detektion dieses Signals mit den virtuellen Spreizkodes (cv) durchgeführt wird, und
   - die Detektionsergebnisse mit den virtuellen Spreizkodes (cv) zum empfangsseitigen Datenstrom des Signals mit dem kleineren Spreizfaktor aneinandergereiht werden.

2. Verfahren nach Anspruch 1, bei dem
   ein Spreizkode (c) mit einem Spreizfaktor (SF), der kleiner als der maximale Spreizfaktor (SFmax) ist, von Symbol zu Symbol oder von Symbolgruppe zu Symbolgruppe geändert wird.

3. Verfahren nach Anspruch 2, bei dem
   die Änderung des Spreizkodes (c) der Aufteilung in virtuelle Spreizkodes (cv) entspricht.

4. Verfahren nach Anspruch 2 oder 3, bei dem
   die Länge der virtuellen Spreizkodes (cv) der Symbollänge des maximalen Spreizfaktors entspricht.

5. Verfahren nach einem der vorherigen Ansprüche, bei dem eine Detektionseinrichtung (DE) für eine Anzahl von Kanälen dimensioniert wird, die der Anzahl von Kanälen mit dem maximalen Spreizfaktor (SFmax) entspricht, wobei zur Verarbeitung von Signalen mit unterschiedlichen Spreizfaktoren eine Detektion auf der Basis von virtuellen Spreizkodes erfolgt.

6. Verfahren nach Anspruch 5, bei dem
   die Detektionseinrichtung (DE) eine gemeinsame Detektion mit Eliminierung zumindest eines Störsignals durchführt.

7. Verfahren einem der vorherigen Ansprüche, bei dem

   - sich die Datensymbole zu einem Empfangssignal zumindest teilweise überlagern,
   - das Empfangssignal abgetastet und eine Empfangsmatrix (e) aufgestellt wird,
   - eine Systemmatrix (A) mit auf signalindividuelle Kanalimpulsantworten bezogenen Werten nach einer Bandstruktur belegt wird, wobei benachbarte Positionen in der Systemmatrix (A) derart belegt werden, daß sich die Werte der verschiedenen Signale abwechseln und die belegten Positionen entsprechend der Überlagerungen zwischen den Symbolen ausgerichtet sind, wobei für die Signale mit dem kleineren Spreizfaktor entsprechend mehr beieinanderliegende Positionen vorgesehen sind,
- eine lineare Detektion für die Datensymbole der zumindest zwei Datenströme durch eine Verknüpfung der Systemmatrix (A) und der Empfangsmatrix (e) durchgeführt wird.

**8.** Empfangseinrichtung für ein Funk-Kommunikationssystem, der zumindest eine Antenne (AT) zum Empfangen eines Empfangssignals zugeordnet ist,
mit einem Kanalschätzer (KS) zum Bestimmen von signalindividuellen Kanalimpulsantworten von zumindest zwei Signalen gleichzeitig übertragener Datenströme mit durch Spreizkodes (c) gespreizter Datensymbole, wobei für die Signale unterschiedliche Spreizkodes (SF) einstellbar sind, die kleiner als ein maximaler Spreizfaktor (SFmax) sind,
mit einer Detektionseinrichtung (DE) zum Detektieren der Signale mit Hilfe der Spreizkodes, wobei

- für ein Signal mit einem Spreizfaktor (SF), der kleiner als der maximale Spreizfaktor (SFmax) ist, mehrere virtuelle Spreizkodes (cv) gebildet werden, die jeweils nur auf einzelne Symbole oder Symbolgruppen des Signals bezogen sind,
- die Detektion dieses Signals mit den virtuellen Spreizkodes (cv) durchgeführt wird, und
- die Detektionsergebnisse mit den virtuellen Spreizkodes (cv) zum empfangsseitigen Datenstrom des Signals mit dem kleineren Spreizfaktor aneinandergereiht werden.

## Claims

**1.** Method for data transmission in a radio communication system with CDMA subscriber separation and variable spread factors, in which

- signals from at least two data streams are transmitted simultaneously in a channel with the aid of data symbols spread by spread codes (c), it being possible to set for the signals different spread factors (SF) which are smaller or equal to a maximum spread factor (SFmax), and
- signals are detected at the receiving end with the aid of the spread codes (c),

**characterized**

- **in that** a plurality of virtual spread codes (cv) are formed at the receiving end for a signal with a spread factor (SF) which is smaller than the maximum spread factor (SFmax), which spread codes are referred in each case only to individual symbols or symbol groups of the signal,
- **in that** the detection of this signal is carried out with the aid of the virtual spread codes (cv), and
- **in that** the detection results with the virtual spread codes (cv) relating to the data stream, at the receiving end, of the signal with the smaller spread factor are juxtaposed.

**2.** Method according to Claim 1, in which a spread code (c) with a spread factor (SF) which is smaller than the maximum spread factor (SFmax) is changed from symbol to symbol or from symbol group to symbol group.

**3.** Method according to Claim 2, in which the change in the spread code (c) corresponds to the division into virtual spread codes (cv).

**4.** Method according to Claim 2 or 3, in which the length of the virtual spread codes (cv) corresponds to the symbol length of the maximum spread factor.

**5.** Method according to one of the preceding claims, in which a detection device (DE) is dimensioned for a number of channels which corresponds to the number of channels with the maximum spread factor (SFmax), detection being performed on the basis of virtual spread codes in order to process signals with different spread factors.

**6.** Method according to Claim 5, in which the detection device (DE) carries out a joint detection with elimination of at least one interfering signal.

**7.** Method according to one of the preceding claims, in which

- the data symbols are superimposed at least partially to form a received signal,

- the received signal is sampled and a reception matrix (e) is set up,
- a system matrix (A) is assigned values responses in accordance with a band structure which are referred to channel pulses relating to individual signals, adjacent positions in the system matrix (A) being occupied in such a way that the values of the various signals alternate with one another, and the occupied positions are aligned in accordance with the superpositions between the symbols, correspondingly more adjacent positions being provided for the signals with the smaller spread factor, and
- a linear detection is carried out for the data symbols of the at least two data streams by combining the system matrix (A) and the reception matrix (e).

8. Receiving device for a radio communication system, which is assigned at least one antenna (AT) for receiving a received signal, having a channel estimator (KS) for determining channel pulse responses, relating to individual signals, of at least two signals of simultaneously transmitted data streams with the aid of data symbols spread by spread codes (c), it being possible to set for the signals different spread codes (SF) which are smaller than a maximum spread factor (SFmax), and having a detection device (DE) for detecting the signals with the aid of the spread codes, whereby

- a plurality of virtual spread codes (cv) are formed for a signal with a spread factor (SF) which is smaller than the maximum spread factor (SFmax), which spread codes are referred in each case only to individual symbols or symbol groups of the signal,
- the detection of this signal is carried out with the aid of the virtual spread codes (cv), and
- the detection results with the virtual spread codes (cv) relating to the data stream, at the receiving end, of the signal with the smaller spread factor are juxtaposed.

## Revendications

1. Procédé de transfert de données dans un système de radiocommunications à distinction entre différents abonnés par COMA et à facteurs d'étalement variables, dans lequel

- des signaux d'au moins deux flux de données sont transmis simultanément dans un canal au moyen de symboles de données étalés avec des codes d'étalement (c), différents facteurs d'étalement (SF) qui sont inférieurs ou égaux à un facteur d'étalement maximal (SFmax) étant réglables pour les signaux,
- les signaux sont détectés du côté réception à l'aide des codes d'étalement (c),

**caractérisé en ce que**

- du côté réception plusieurs codes d'étalement virtuels (cv) sont formés pour un signal ayant un facteur d'étalement (SF) inférieur au facteur d'étalement maximal (SFmax), ces codes d'étalement virtuels faisant respectivement référence seulement à des symboles individuels ou à des groupes de symboles du signal,
- la détection de ce signal est réalisée au moyen des codes d'étalement virtuels (cv), et
- les résultats de la détection sont alignés les uns à côté des autres au moyen des codes d'étalement virtuels (cv) vers le flux de données côté réception du signal ayant le facteur d'étalement le plus petit.

2. Procédé selon la revendication 1, dans lequel un code d'étalement (c) ayant un facteur d'étalement (SF) inférieur au facteur d'étalement maximal (SFmax) est modifié de symbole en symbole ou de groupe de symboles en groupe de symboles.

3. Procédé selon la revendication 2, dans lequel la modification du code d'étalement (c) correspond à la répartition en codes d'étalement virtuels (cv).

4. Procédé selon la revendication 2 ou 3, dans lequel la longueur des codes d'étalement virtuels (cv) correspond à la longueur des symboles du facteur d'étalement maximal.

5. Procédé selon l'une quelconque des revendications précédentes, dans lequel un dispositif de détection (DE) est dimensionné pour un nombre de canaux correspondant au nombre de canaux à facteur d'étalement maximal (SFmax), une détection sur la base de codes d'étalement virtuels étant réalisée pour le traitement de signaux ayant différents facteurs d'étalement.

**6.** Procédé selon la revendication 5, dans lequel
le dispositif de détection (DE) réalise une détection commune avec l'élimination d'au moins un signal perturbateur.

**7.** Procédé selon l'une quelconque des revendications précédentes, dans lequel

- les symboles de données se superposent au moins en partie en un signal de réception,
- le signal de réception est exploré et une matrice de réception (e) est établie,
- une matrice du système (A) est affectée avec des valeurs relatives à des réponses d'impulsion de canal individuelle suivant une structure en bande, des positions adjacentes dans la matrice du système (A) étant affectées de telle manière que les valeurs des différents signaux alternent et que les positions occupées sont orientées entre les symboles de manière correspondant aux superpositions, un plus grand nombre de positions adjacentes étant prévu pour les signaux à facteur d'étalement plus petit,
- une détection linéaire des symboles de données d'au moins deux flux de données est réalisée par une connexion de la matrice du système (A) et de la matrice de réception (e).

**8.** Dispositif de réception pour un système de radiocommunications auquel est attribué au moins une antenne (AT) pour la réception d'un signal de réception, avec un dispositif d'évaluation de canaux (KS) pour déterminer les réponses d'impulsion de canal individuelles au signal d'au moins deux canaux de flux de données transmis simultanément avec des symboles de données étalés au moyen de codes d'étalement (c), différents codes d'étalement (SF) étant réglables pour les signaux qui sont inférieurs à un facteur d'étalement maximal (SFmax),
avec un dispositif de détection (DE) pour détecter les signaux à l'aide des codes d'étalement,

- plusieurs codes d'étalement virtuels (cv) étant formés pour un signal ayant un facteur d'étalement (SF) inférieur au facteur d'étalement maximal (SFmax), ces codes d'étalement virtuels faisant respectivement référence à seulement des symboles individuels ou à des groupes de symboles du signal,
- la détection de ce signal étant réalisée au moyen des codes d'étalement virtuels (cv), et
- les résultats de la détection étant alignés les uns à côté des autres au moyen des codes d'étalement virtuels (cv) vers le flux de données côté réception du signal ayant le facteur d'étalement le plus petit.

## Fig. 1

(Stand der Technik)

# Fig. 2

Datenstrom 1           Datenstrom K

| Kanalkodierer | Kanalkodierer |

| Verwürfler | Verwürfler |

| Modulator | Modulator |

c1 → | Spreizer |     c5 → | Spreizer |

Summierglied

Funkblockbildner

Chipimpulsfilter

zum D/A-Wandler

# Fig. 3

vom A/D-Wandler

digitaler Tiefpaß

KS

c1..c5 → DE

Demodulator

Entwürfler

Kanaldekodierer

Datenstrom 1

Demodulator

Entwürfler

Kanaldekodierer

Datenstrom K

Fig. 4

Fig. 5